(19) Europäisches Patentamt
European Patent Office
Office européen des brevets

(11) Publication number: **0 136 099**
**B1**

(12) # EUROPEAN PATENT SPECIFICATION

(45) Date of publication of patent specification: **25.10.89**

(51) Int. Cl.$^4$: **H 01 M 10/40**, H 01 M 4/02

(21) Application number: **84305885.0**

(22) Date of filing: **29.08.84**

(54) **Plastics electrode secondary battery.**

(30) Priority: **31.08.83 JP 134885/83**
**16.03.84 JP 37530/84**
**16.03.84 JP 37531/84**

(43) Date of publication of application:
**03.04.85 Bulletin 85/14**

(45) Publication of the grant of the patent:
**25.10.89 Bulletin 89/43**

(84) Designated Contracting States:
**DE FR GB**

(56) References cited:
**EP-A-0 061 962**
**EP-A-0 084 330**
**EP-A-0 108 954**

**JAPANESE JOURNAL OF APPLIED PHYSICS, vol. 22, no. 5, part 2, May 1983, pages L275-L277, Tokyo, JP; T.NAGATOMO et al.: "A long-lasting polyacetylene battery with high energy density"**

**IDEM**

(73) Proprietor: **HOXAN CORPORATION**
**2-Nishi, 1-chome Kita 3-jyo**
**Chuo-ku Sapporo-shi Hokkaido (JP)**

(72) Inventor: **Hide, Ichiro c/o Hoxan Laboratory**
**Hoxan Corporation No. 3-17 Kikushi 5-jo 2-chome**
**Shiroishi-ku Sapporo (JP)**
Inventor: **Umetsu, Junichi c/o Hoxan Laboratory**
**Hoxan Corporation No. 3-17 Kikushi 5-jo 2-chome**
**Shiroishi-ku Sapporo (JP)**
Inventor: **Maeda, Yasuhiro c/o Hoxan Laboratory**
**Hoxan Corporation No. 3-17, Kikushi 5-jo 2-chome**
**Shiroishi-ku Sapporo (JP)**

(74) Representative: **Spencer, Graham Easdale et al**
**A.A. Thornton & CO Northumberland House**
**303-306, High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 136 099 B1

(56) References cited:
PATENTS ABSTRACTS OF JAPAN, vol. 9, no. 118 (E-316)1841r, 23rd May 1985; & JP-A-60 9068 (HOKUSAN K.K.) 18-01-1985

PATENTS ABSTRACTS OF JAPAN, vol. 8, no. 231 (E-274)1668r, 24th October 1984; & JP-A-59 112 584 (SHOWA DENKO K.K.) 29-06-1984

PATENTS ABSTRACTS OF JAPAN, vol. 8, no. 142 (E-254)1579r, 3rd July 1984; & JP-A-49 51 483 (SHOWA DENKO K.K.) 24-03-1984

**Description**

This invention is concerned with a plastic electrode secondary battery which employs polyacetylene membranes as the electrodes.

Polyacetylene is the simplest straight-chain conjugated high-molecular weight compound that contains only carbon and hydrogen and has the properties of a semiconductor. A polyacetylene membrane prepared with a Ziegler-Natta catalyst of the type $Ti(OC_4H_9)_4$-$Al(C_2H_5)_3$ has a fibril (fibrous ultrafine crystal) mesh structure with interstices of approx. 200Å (20 mm) in diameter. When this membrane is slightly doped with halogen gas or arsenic pentafluoride, its conductivity can be significantly altered.

Since polyacetylene membrane has extremely good chemical stability, light weight and a fibril mesh structure of large surface area, it has already been noted as a suitable electrode material for use in secondary batteries.

A conventional plastics electrode secondary battery of this type has a positive polyacetylene membrane electrode, a negative polyacetylene membrane electrode, a separator interposed between the positive electrode and the negative electrode, and an electrolyte comprising a solution of lithium perchlorate ($LiC1O_4$) in propylene carbonate. Secondary batteries of this type having a voltage of 2.5 V, an energy density of 150 Wh/Kg, a maximum output density of 17 Kw/Kg, a power efficiency of 80% and can be charged/discharged approx. 300 times. These characteristics compare favourably with those of a lead storage battery, which has a voltage of 2.1 V, an energy density of 30 Wh/kg, and can be charged/discharged 200—300 times. Thus the secondary battery gives improved performance with a reduction in overall weight.

The performance of the secondary battery described above is not, however, wholly satisfactory. In particular, undesirable reactions tend to take place between the electrodes and the electrolyte which can lead to significant deterioration in the performance of the battery.

We have now found that such undesirable reactions can be substantially eliminated by the provision of auxiliary metal electrodes bonded to the polyacetylene membrane electrodes of the secondary battery.

According to the present invention, there is provided a plastics electrode secondary battery which comprises, within a container:

a positive electrode comprising a polyacetylene membrane,

a negative electrode comprising a polyacetylene membrane,

a separator interposed between the positive electrode and the negative electrode,

an auxiliary positive metal electrode bonded to the surface of the positive electrode remote from the separator,

an auxiliary negative metal electrode bonded to the surface of the negative electrode remote from the separator, and

an electrolyte comprising a solution of lithium perchlorate in propylene carbonate;

characterised in that the positive and negative electrodes each consist of a bonded laminate of a plurality of polyacetylene membranes so arranged that the surface density of the outer membranes adjacent to the auxiliary electrodes is greater than that of the inner membranes adjacent to the separator.

In a preferred embodiment of the invention a film of deposited gold is present on the surface of the positive polyacetylene electrode adjacent to the auxiliary positive electrode and a film of deposited aluminium is present on the surface of the negative polyacetylene electrode adjacent to the auxiliary negative electrode.

In another preferred embodiment of the invention, the number of polyacetylene membranes in the laminated positive electrode is less than the number of polyacetylene membranes inthe laminated negative electrode.

In order that they may be more fully understood, preferred embodiments of the invention will now be described, by way of example, with reference to the accompanying drawings, in which:

FIGURE 1 is a schematic vertical sectional front view of a conventional example of plastic electrode secondary battery not embodying the present invention;

FIGURE 2 is a schematic vertical sectional front view showing another conventional example of battery;

FIGURE 3 is a graphical representation showing the relationship between the duration of charging and discharging times and the voltage of the battery;

FIGURE 4 is a graphical representation showing the relationship between the number of charge/discharge cycles performed and the corresponding efficiencies of the voltage, current and electrical power of the battery;

FIGURE 5 is a schematic vertical sectional front view of a plastics electrode secondary battery showing an embodiment of the present invention;

FIGURE 6 is an enlarged plan view of the polyacetylene membrane which is in contact with the separator of the battery in the preferred embodiment of the present invention, for the purposes of describing the surface density;

FIGURE 7 is an enlarged plan view of the polyacetylene membrane which is in contact with the auxiliary electrode of the battery in the preferred embodiment of the present invention, for the purposes of describing the surface density;

FIGURES 8 and 9 are enlarged vertical sectional views of the polyacetylene membranes bonded to the auxiliary positive and negative electrodes according to a preferred embodiment of the present invention; and

FIGURE 10 is a schematic vertical front view of a plastic electrode secondary battery showing the preferred embodiment of the present invention.

A plastic electrode secondary battery as shown in Figures 1 and 2, comprises a container 1 formed of an inert synthetic material such as glass or polyethylene, a polyacetylene membrane electrode 4 bonded to a positive auxiliary electrode 9, a polyacetylene membrane electrode 6 bonded to a negative auxiliary electrode 10, a separator 7 comprising a glass fibre film interposed between the positive electrode 4 and the negative electrode 6, and an electrolyte 8 comprising a solution of lithium perchlorate in propylene carbonate sealed in the container 1, the concentration of the solution being IN. In Figure 2, a bleeder 2 is provided which is capable of exhausting gas externally when the pressure of the gas produced in the container 1 reaches a predetermined value.

In Figure 1, the connections 3 and 5 are respectively connected to the auxiliary electrodes 9 and 10, while in Figure 2, the connections 3 and 5 are respectively connected not only to the auxiliary electrodes 9 and 10 but also to the polyacetylene electrodes 4 and 6, the electrodes 9 and 10 being respectively interposed between the electrodes 4 and 6 and the container 1.

The surface of the polyacetylene electrode 4 in contact with the auxiliary positive electrode 9 has a film of deposited gold and the surface of the polyacetylene electrode 6 in contact with the auxiliary negative electrode 10 has a film of deposited aluminium. The auxiliary electrodes 9 and 10 are respectively bonded to the treated outer surfaces of the polyacetylene electrodes 4 and 6, the inner surfaces of which are in contact with the separator 7, by methods such as press-bonding and supersonic bonding.

In fabricating the secondary battery described above, it is recommended that the glass fiber filter of the separator 7, the electrodes 9 and 10 and the container 1 are dried *in vacuo*, that the PC is dried under reduced pressure, and that the lithium perchlorate is dehydrated *in vacuo* for 5 hours, then dried under reduced pressure for 24 hours.

The surface treatment of the polyacetylene electrodes is carried out as follows: gold is heated and deposited at high vacuum as a thin film on that surface of the positive polyacetylene electrode which will be in contact with the auxiliary positive electrode 9 and, similarly, aluminium is heated and deposited at high vacuum as a thin film on that surface of the negative polyacetylene electrode which will be in contact with the auxiliary negative electrode 10.

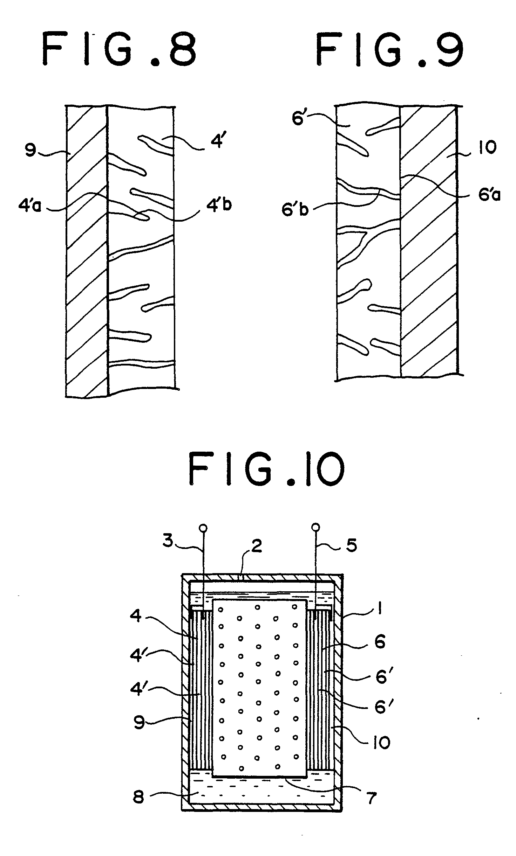

In this way, as shown in Figures 8 and 9, a film of gold 4'b is deposited in the surface cavities of the fibril structure of the polyacetylene membrane 4' and a film of aluminium 6'b is deposited in the surface cavities of the polyacetylene membrane 6'.

The thicknesses of the deposited films 4'b and 6'b are preferably in the range of approx. 0.1 µm to 5 µm. The deposition time is kept to a minimum to prevent thermal deterioration of the film.

To produce the polyacetylene membranes, 25 ml of toluene, 7.2 ml of triethyl aluminium and 4.5 ml of tetraethoxytitanium are mixed to give the Ziegler-Natta catalyst. The mixture is cooled to −78°C and acetylene gas blown in to give polyacetylene membrane with a thickness of 70 µm and a bulk density of 0.36 g/cm$^3$.

The polyacetylene membrane was then cut into square pieces of 2 cm × 2 cm; gold was deposited on the positive electrode and aluminium was deposited on the negative electrode, to a thickness of approx. 1µm. These membranes were employed in the secondary battery described above.

The following table shows the shortcircuiting current for such a battery after charging at 0.25 mA for 30 minutes compared with the shortcircuiting current of a battery without surface treated polyacetylene electrodes.

Table

| Battery | Shortcircuiting current (mA/cm$^2$) |
|---|---|
| Conventional | 50 |
| Surface treated | 121 |

Thus a shortcircuiting current of approximately 2.5 times that of a conventional battery.

In secondary batteries as described above, the effective areas of contact between the positive and negative polyacetylene electrodes and their respective auxiliary electrodes are greater than those of polyacetylene electrodes which have not been surface treated, thereby increasing the shortcircuiting current. Furthermore, the area of contact between the polyacetylene electrodes and the electrolyte is not affected, so that the battery is capable of withstanding heavy loads.

The voltage of a secondary battery fabricated as described above is 3.3 to 3.5V, the energy density is 424Kh/Kg, and the maximum output density is 24.5 Kw/Kg, all substantial improvements in performance

compared with the conventional plastics electrode secondary battery without auxiliary electrodes. The power efficiency remains at 80%.

The electrode reactions of a secondary battery of this type are shown below in such a manner that an arrow to the right indicates a charging reaction and an arrow to the left indicates a discharging reaction:

$$(CH(C1O_4^-)_y)_x \rightleftarrows (CH)_{x+xy}C1O_4^-$$

... Positive electrode

$$(CH(Li^+)_y)_x \rightleftarrows (CH)_{x+xy}Li^+$$

... Negative electrode

$$(CH(C1O_4^-)_y)_x+(CH(Li^+)_y)_x$$

$$\rightleftarrows 2(CH)_{x+xy}(Li^++C1O_4^-)$$

... Battery reaction

The results of cycle tests in which charging at a constant current of 50 μA/cm was carried out for 10 min. and then discharging at a constant resistance of 50 K Ω for 10 min. are shown in Figure 3 and indicate that the secondary battery could produce 3.3 to 3.5V even after 2,600 charge/discharge cycles, and that though the discharging characteristics slightly deteriorated after about 1300 cycles, no substantial deterioration occurred.

The effects of the cycle test on the various efficiencies of the battery are shown in Figure 4. Thus after prolonged cycle testing the voltage efficiency nV, the current efficiency nI, and the power efficiency nP did not drop abruptly from their respective values of 99%, 71% and 70%; on the other hand, when platinum positive and negative auxiliary electrodes were employed without gold and aluminium deposition films on the contact surfaces of the polyacetylene electrodes the discharging characteristics deteriorated rapidly as the number of cycles increased. This is believed to arise from the reaction of lithium ions in the negative auxiliary electrode with impurities in the electrolyte, leading to a progressive deterioration at the surface of the auxiliary electrode. When copper plates were used as the auxiliary electrodes, the cycle test characteristics were relatively stable, but the deterioration of the auxiliary electrodes resulting from reaction with $C1O_4^-$ in the electrolyte could be observed.

Since a glass filter is used as the separator in the battery, the electrolyte absorption rate of the separator is a relatively high 710%, and the internal resistance a relatively low 7.4 ohms. For these reasons, the current produced in the battery is improved, the fibril structure of the polyacetylene membrane is more effectively activated, the movement of the solute ions through this structure is facilitated, and the unwanted reaction at the surface of the electrodes arising from repeated charging and discharging is eliminated, resulting in minimal deterioration in the electric characteristics of the battery.

In an embodiment of the invention, a plurality of polyacetylene membranes, instead of a single membrane, are laminated to form the positive and negative electrodes, thereby improving the various characteristics of the secondary battery, which will now be described in more detail with reference to Figure 5.

Its fundamental structure is the same as that of the battery shown in Figures 1 and 2, wherein the same components in Figure 5 are designated by the same or equivalent reference numerals in Figures 1 and 2 except that a plurality of polyacetylene membranes 4, 4', . . and 6, 6', . . bonded in a laminated state are equivalent to the positive polyacetylene membmrane electrode 4 and the negative polyacetylene membrane electrode 6 respectively. The laminated polyacetylene electrodes have a thickness of 50 to 150 μm bulk density of 0.4 $g/cm^3$, and a conductivity of $10^{-9}$ S/cm. The means by which the polyacetylene membranes are bonded to one another include press bonding and supersonic bonding, in the same way as the polyacetylene membrane electrodes are bonded to the auxiliary electrodes.

It has been found that when both the positive and negative electrodes of the battery consist of laminated polyacetylene membranes instead of single membranes, there is a significant increase in the short-circuit current of the battery after (see Table below).

The table refers to laminated electrodes with a bulk density of 0.3 $g/cm^3$ prepared by laminating single membranes with a thickness of 70—80 μm at a temperature of −78° and a pressure of 1 atmosphere for a laminating time of about five minutes. A charging current of 1mA (0.5 $mA/cm^2$) was used in the tests.

Table

| Number of polyacetylene membranes in laminate | Shortcircuiting current after 1 hour charging ($mA/cm^2$) | Shortcircuiting current after 3 hours charging ($mA/cm^2$) |
|---|---|---|
| 1 | 25 | 55 |
| 2 | 119 | 165 |
| 4 | 142 | 197 |
| 6 | 145 | 202 |

The reason the shortcircuiting current is increased by the lamination of the polyacetylene membranes is believed to be that improved ionic mobility through the laminate increases the ability to retain charge, whilst also allowing almost complete discharging to be carried out. The improved ionic mobility in the laminate arises from the fibril structure of the membrane with its many small interstices.

In the embodiment of the plastics electrode secondary battery of the invention, the polyacetylene membranes are not only laminated as described above, but the surface densities of the individual membranes are suitably selected, thereby improving the characteristics of the battery.

The surface of the outer polyacetylene membranes in contact with the auxiliary positive and negative electrodes 9 and 10 are greater than those of the inner polyacetylene membranes which are in contact with the separator 7.

To fabricate the laminated polyacetylene membranes described above, two Ziegler-Natta catalyst of the type $Ti(OC_4H_9)_4$—$Al(C_2H_5)_3$ containing 100 and 600 mmol/litre of Ti with a Al:Ti molar ratio of 4:1 are tyically employed as the catalysts.

The lamination of the polyacetylene membranes is performed at a temperature of −78° and a pressure of 1 atmosphere.

To fabricate the laminated polyacetylene electrode, a vertical laminating bin, not shown, is filled with an inert gas and rotated at 100 r.p.m. While the laminating bin sealed with inert gas is being rotated, 1 milli litre of the catalyst with 600 mmol/litre of Ti is dropped from a catalyst inlet to the bottom of the bin. When the catalyst has spread on the bottom surface of the bin, rotation is stopped and, the inert gas is evacuated from the bin. Acetylene gas is then introduced into the bin for 10 min. to produce the first layer of polyacetylene membrane (B).

The bin is again rotated, 1 milli litre of the catalyst with 100 mmol/litre of Ti is dropped from the inlet onto the first layer of polyacetylene membrane in the bin, and the procedure completed as before to produce a second layer of polyacetylene membrane (A) laminated to the first layer B but of a different surface density. In this case, membrane A has a low surface density, as shown in Figure 6, while membrane B has a large surface density, as shown in Figure 7. Specifically, membrane B has a substantial fibrous part B'' with small cavities B'. On the other hand, membrane A has a reduced fibrous part A'' and longer cavities A'.

In the battery, the polyacetylene membrane B is in contact with the auxiliary positive and negative electrodes 9 and 10 and the polyacetylene membrane A is in contact with separator 7.

The following table shows the shortcircuiting current after charging for a battery in which the positive and negative electrodes consisted of laminates of polyacetylene membranes of different surface densities, as described above. The charging conditions were 2 $mA/cm^2$ for 1 hour.

Table

| Test No. | Laminating conditions of polyacetylene membranes (Ti conc. (mmol/L) x time (min.) | Example No. | Thickness (micron) of polyacetylene membrane x surface density ($g/cm^3$) | Shortcircuiting current ($mA/cm^3$) |
|---|---|---|---|---|
| 1 | 600 x 10 | 1' | 250 x 0.8 | 150 |
| | (High density face in contact with aux. electrode.) | | | |
| | 100 x 10 | 1" | 250 x 0.5 | 30 |
| | (Low density face in contact with aux. electrode.) | | | |
| 2 | 100 x 10 | | 70 x 0.12 | 80 |
| 3 | 300 x 10 | | 120 x 0.36 | 90 |
| 4 | 600 x 10 | | 130 x 0.51 | 70 |

The Table shows that when the surface densities of the polyacetylene membranes in the laminates of the positive and negative electrodes are increased, thereby increasing the effective areas of contact with both auxiliary electrodes, the shortcircuiting currents are increased.

In the embodiment of the secondary battery described above, the effective areas of contact between the positive and negative electrodes and their respective auxilairy electrodes are greater than those for laminated electrodes in which the polyacetylene membranes have a uniform surface density, thereby increasing the shortcircuiting current. Furthermore, the number of cavities in polyacetylene electrodes of this type is significantly reduced, so that the area of contact between the polyacetylene electrodes and the electrolyte is not affected, and the battery is capable of withstanding heavy loads.

In a preferred embodiment of the invention, the fundamental structure of the battery is the same as that of Figure 5 except that the characteristics of the battery are improved and the cost of fabrication is reduced by suitably selecting the number of polyacetylene membranes in the laminated electrodes.

Referring to Figure 10, this preferred embodiment of the invention has substantially the same structure as that shown in Figure 5, wherein the same components are designated by the same or equivalent reference numerals. In this embodiment of the battery, the number of polyacetylene membranes 4, 4',.. in the laminated positive electrode is less than the number of polyacetylene membranes 6, 6'.. in the laminated negative electrode.

The following two tables show the shortcircuiting currents after charging for 1 hour and 3 hours for batteries containing varying numbers of polyacetylenic membranes in the two laminated electrodes.

Table (Charging time 1 hr.)

| Number of pos. & neg. membranes | Short-circuiting current ($mA/cm^2$) |
|---|---|
| 2 x 2 (sheets) | 119 |
| 4 x 4 | 142 |
| 6 x 6 | 145 |

| Number of pos. memb. / Number of neg. memb. | 1 | 2 | 3 | 4 |
|---|---|---|---|---|
| 2 | 100 ($mA/cm^2$) | | 118 | 120 |
| 4 | 121 | 135 | 141 | |
| 6 | 126 | 141 | 142 | |

Table (Charging time 3 hr.)

| Number of pos. & neg. membranes | Short-circuiting current ($mA/cm^2$) |
|---|---|
| 2 x 2 (sheets) | 165 |
| 4 x 4 | 197 |
| 6 x 6 | 202 |

| Number of pos. memb. / Number of neg. memb. | 1 | 2 | 3 | 4 |
|---|---|---|---|---|
| 2 | 151 ($mA/cm^2$) | | 166 | 164 |
| 4 | 186 | 182 | 195 | |
| 6 | 192 | 198 | 201 | |

In the above two tables, the shortcircuiting current of those batteries which have an equal number of polyacetylene membranes in the positive and negative electrodes are indicated in the left columns.

The first table shows that after 1 hour's charging the shortcircuiting currents for those batteries in which the ratio of negative membranes to positive membranes was $\geqslant$ 2:1 decreased relative to the corresponding battery with an equal number of negative and positive membranes. On the other hand, substantantially unchanged currents were obtained when the ratio of negative membranes to positive membranes was $<$ 2:1.

The second table shows that after 3 hours charging the shortcircuiting currents for those batteries in which the ratio of negative membranes to positive membranes was ≥2:1 had also decreased relative to the corresponding battery with an equal number of negative and positive membranes, but to a lesser extent than after 1 hours charging. Again, substantially unchanged currents were obtained when the ratio of negative membranes to positive membranes was <2:1.

With both charging times it was found that as the ratio of negative membranes to positive membranes was increased beyond 2:1, the decrease in the shortcircuiting current tended to a maximum of 15%.

The reason the shortcircuiting current of the battery decreased as the ratio of negative membranes to positive membranes exceeds 2:1 is believed to arise from the presence of lithium ions in the negative electrode which react with impurities in the electrolyte, thereby reducing the shorcircuting current. Increasing the proportion of membranes in the laminated negative electrode increases the surface area of the electrode at which this unwanted reaction can occur and causes a decrease in the shortcircuiting current. However, since lithium ions are absent from the positive electrode, reducing the proportion of positive membranes has no effect on the shortcircuiting current until the number of positive membranes is reduced to half the number of negative membranes.

According to the embodiment described above, the shortcircuting current of a battery in which the number of positive membranes is reduced to almost half the number of negative membranes is substantially the same as that of the corresponding battery with an equal number of positive and negative membranes, thereby allowing a saving in the cost of fabrication by reducing the number of membranes required in the lamianted positive electrode.

**Claims**

1. A plastics electrode secondary battery which comprises, within a container:
a positive electrode (4) comprising a polyacetylene membrane,
a negative electrode (6) comprising a polyacetylene membrane,
a separator (7) interposed between the positive electrode and the negative electrode,
an auxiliary positive metal electrode (9) bonded to the surface of the positive electrode remote from the separator,
an auxiliary negative metal electrode (10) bonded to the surface of the negative electrode remote from the separator, and
an electrolyte (8) comprising a solution of lithium perchlorate in propylene carbonate;
characterised in that the positive and negative electrodes each consist of a bonded laminate of a plurality of polyacetylene membranes so arranged that the surface density of the outer membranes adjacent to the auxiliary electrodes is greater than that of the inner membranes adjacent to the separator.

2. A secondary battery as claimed in claim 1, characterised in that a film of deposited gold is present in the surface of the positive polyacetylene electrode adjacent to the auxiliary positive electrode and a film of deposited aluminium is present on the surface of the negative polyacetylene electrode adjacent to the auxiliary negative electrode.

3. A secondary battery as claimed in either claim 1 or claim 2, characterised in that the number of polyacetylene membranes in the laminated positive electrode is less than the number of polyacetylene membranes in the laminated negative electrode.

**Patentansprüche**

1. Sekundärbatterie mit Kunststoffelektroden, enthaltend innerhalb eines Behälters:
eine positive Elektrode (4), die eine Polyacetylenmembran aufweist,
eine negative Elektrode (6), die eine Polyacetylenmembran aufweist,
einen Separator (7), der zwischen der positiven Elektrode und der negativen Elektrode angeordnet ist,
eine positive Metallhilfselektrode (9), die an der Seite der positiven electrode angebracht ist, die dem Separator abgewandt ist,
eine negative Metallhilfselektrode (10), die an der Seite der negativen Elektrode angebracht ist, die dem Separator abgewandt ist, und
einen Elektrolyten (8), enthaltend eine Lösung von Lithiumperchlorat in Propylencarbonat;
dadurch gekennzeichnet, daß die positiven und negativen Elektroden jeweils aus einem verbundenen Laminat aus mehreren Polyacetylenmembranen bestehen, die so angeordnet sind, daß die Oberflächendichte der äußeren Membranen benachbart den Hilfselektroden größer ist als jene der inneren Membranen benachbart dem Separator.

2. Sekundärbatterie nach Anspruch 1, dadurch gekennzeichnet, daß ein Film aus abgeschiedenem Gold auf der Oberfläche der positiven Polyacetylenelektrode benachbart der positiven Hilfselektrode vorhanden ist und ein Film aus abgeschiedenem Aluminium auf der Oberfläche der negativen Polyacetylenelektrode benachbart der negativen Hilfselektrode vorhanden ist.

3. Sekundärbatterie nach Anspruch 1 oder 2, dadurch gekennzeichnet, daß die Anzahl der Polyacetylenmembranen in der laminierten positiven Elektrode geringer als die Anzahl der Polyacetylenmembranen in der laminierten negativen Elektrode ist.

**Revendications**

1. Une batterie secondaire à électrodes en matières plastiques qui comprend, à l'intérieur d'un conteneur:

une électrode positive (4) comprenant une membrane en polyacétylène,

une électrode négative (6) comprenant une membrane en polyacétylène,

un séparateur (7) intercalé entre l'électrode positive et l'électrode négative,

une électrode auxiliaire positive en métal (9) liée à la surface de l'électrode positive éloignée du séparateur,

une électrode auxiliaire négative en métal (10) liée à la surface de l'électrode négative éloignée du séparateur, et

un électrolyte (8) comprenant une solution de perchlorate de lithium dans du carbonate de propylène;

caractérisée en ce que les électrodes positive et négative consistent chacune en un stratifie lié de plusieurs membranes de polyacétylène disposées de façon que la densité de surface des membranes extérieures adjacentes aux électrodes auxiliaires soit supérieure à celle des membranes intérieures adjacentes au séparateur.

2. Une batterie secondaire selon la revendication 1, caractérisée en ce qu'un film d'or déposé est présent dans la surface de l'électrode de poly acéthylène positive adjacente à l'électrode auxiliaire positive et qu'un film d'aluminium déposé est présent sur la surface de l'électrode de polyacéthylène négative adjacente à l'électrode auxiliaire négative.

3. Une batterie secondaire selon la revendication 1 ou 2, caractérisée en ce que le nombre de membranes de polyacétylène dans l'électrode positive stratifiée est inférieur au nombre de membranes de polyacétylène dans l'électrode négative stratifiée.

# FIG.1

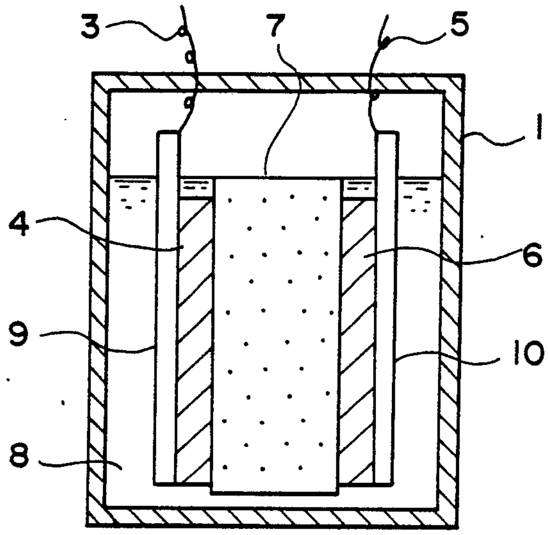


# FIG.2

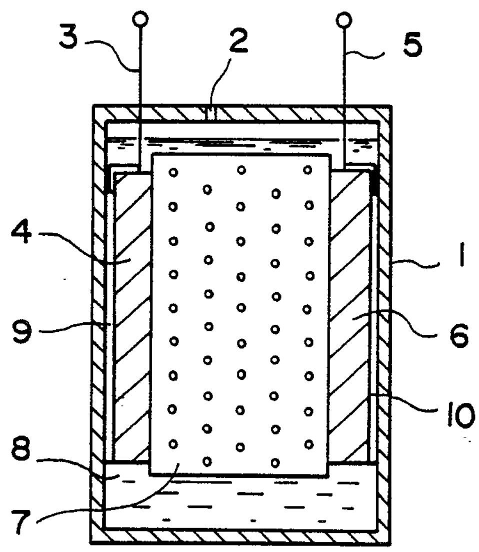

FIG.3

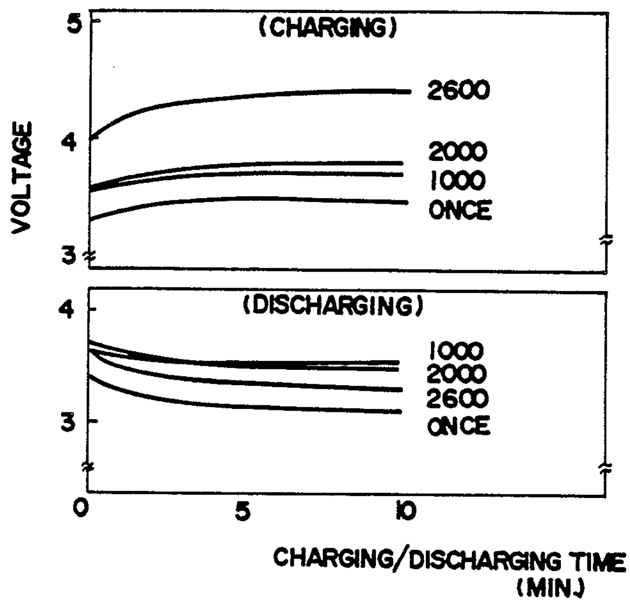
(CHARGING)
2600
2000
1000
ONCE
(DISCHARGING)
1000
2000
2600
ONCE
VOLTAGE
5
4
3
4
3
0
5
10
CHARGING/DISCHARGING TIME (MIN.)

FIG.4

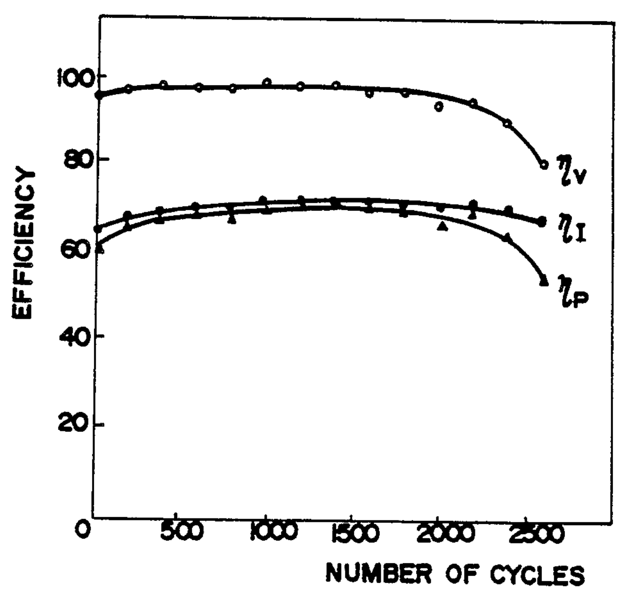
EFFICIENCY
100
80
60
40
20
0
500
1000
1500
2000
2500
NUMBER OF CYCLES
$\eta_V$
$\eta_I$
$\eta_P$

FIG.5

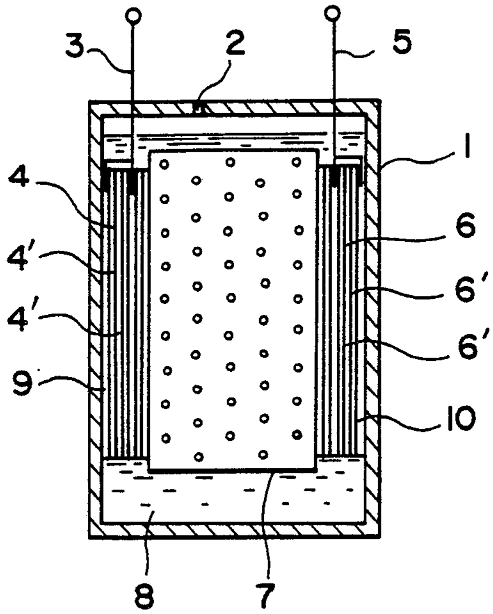


FIG.6

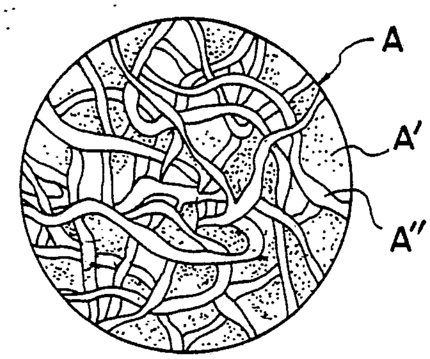


FIG.7

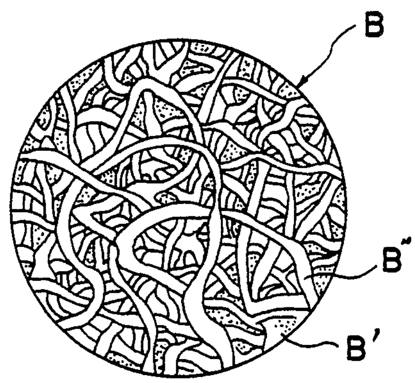

FIG.8

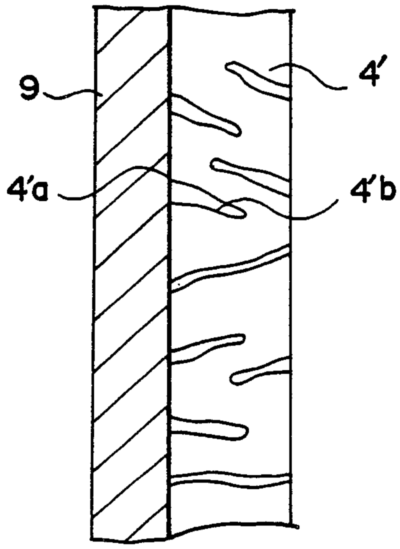


FIG.9

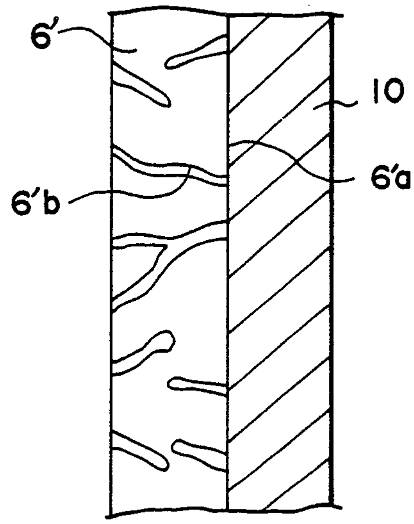


FIG.10